# EUROPEAN PATENT APPLICATION

(11) **EP 4 778 965 A1**
(43) Date of publication of application: **22.07.2026**
(21) Application number: 24904122.9
(22) Date of filing: 02.12.2024
(51) Int. Cl.: C08J 7/043, C08J 7/04, C08J 5/18, C09D 4/00, C09D 143/04, C09D 183/06, C09D 163/00, G09F 9/30

(54) **COATING FILM COMPRISING FIRST COATING LAYER AND SECOND COATING LAYER, AND DISPLAY DEVICE COMPRISING SAME**

(30) Priority: 15.12.2023 KR 20230182660; 22.11.2024 KR 20240168980
(71) Applicant: Kolon Industries, Inc., Seoul 07793 (KR)
(72) Inventor: AHN, Sang-Hyun, Seoul 07793 (KR); YANG, Pil Rye, Seoul 07793 (KR)
(74) Representative: Ter Meer Steinmeister & Partner
(86) International application number: PCT/KR2024/019418
(87) International publication number: WO 2025/127557

(57) **Abstract**

Disclosed are a coating film including a base film, a first coating layer on the base film, a second coating layer on the first coating layer, and an interlayer bonding polymer disposed across the first coating layer and the second coating layer, a method of producing the coating film, and a display device including the same.

## Description

### [Technical Field]

The present disclosure relates to a coating film including a first coating layer and a second coating layer, a method of producing the coating film, and a display device including the coating film.

### [Background Art]

A light-transmitting film is a core material of optical and flexible displays and the importance thereof is increasing. In particular, the light-transmitting film is used as a material to replace glass in the display field due to lightness, processability, and flexibility thereof. In general, a light-transmitting film is known to have poorer mechanical properties such as poorer surface hardness and abrasion resistance than glass. For this reason, research to improve the abrasion resistance of the light-transmitting film is being conducted in order to apply the light-transmitting film to the display field.

In an approach to improve the mechanical or optical properties of the light-transmitting film, a coating layer may be disposed on the surface of the light-transmitting film. The light-transmitting film on which the coating layer is disposed is also called a "coating film".

### [Disclosure]

### [Technical Problem]

Therefore, the present disclosure has been made in view of the above problems, and it is one aspect of the present disclosure to provide a coating film having excellent adhesiveness.

It is another aspect of the present disclosure to provide a coating film that includes a first coating layer and a second coating layer and has excellent adhesive strength between the first coating layer and the second coating layer.

It is another aspect of the present disclosure to provide a coating film that has excellent hardness and adhesiveness.

It is another aspect of the present disclosure to provide a method of producing a coating film.

It is yet another aspect of the present disclosure to provide a display device including the coating film.

### [Technical Solution]

In accordance with an aspect of the present disclosure, the above and other objects can be accomplished by the provision of a coating film including a base film, a first coating layer on the base film, a second coating layer on the first coating layer, and an interlayer bonding polymer disposed across the first coating layer and the second coating layer, wherein the interlayer bonding polymer includes an epoxy-based polymer, and the coating film has grid pattern peelability of 1 or less.

One end of the interlayer bonding polymer may be disposed in the first coating layer and the other end of the interlayer bonding polymer may be disposed in the second coating layer.

The interlayer bonding polymer may be disposed across the first coating layer and the second coating layer.

The interlayer bonding polymer may be formed by polymerization of a thermally polymerizable monomer.

The second coating layer may contain an epoxy-based polymer resin.

The first coating layer may contain a siloxane monomer.

In accordance with another aspect of the present disclosure, there is provided a method of producing a coating film including applying a first coating composition to a base film, irradiating the first coating composition with light to form a first coating layer, applying a second coating composition to the first coating layer, and applying heat to the second coating composition to form a second coating layer, wherein the first coating composition contains an epoxy-based siloxane monomer and an acryl-based siloxane monomer, and the second coating composition contains an epoxy-based monomer.

In accordance with another aspect of the present disclosure, there is provided a display device including a display panel and the optical film disposed on the display panel.

### [Advantageous effects]

The coating film according to one embodiment of the present disclosure may have excellent adhesiveness because it includes an interlayer bonding polymer disposed across the first coating layer and the second coating layer.

The coating film according to one embodiment of the present disclosure may have excellent hardness because the second coating layer has excellent adhesive stability.

According to one embodiment of the present disclosure, by controlling the composition and curing conditions of the first coating layer and the second coating layer during the production process of the coating film, the interlayer bonding polymer disposed across the first coating layer and the second coating layer may be formed.

The coating film according to one embodiment of the present disclosure may be attached to a display surface of a display device. The display device including the coating film may have excellent surface hardness.

### [Description of Drawings]

FIG. 1 is a schematic diagram illustrating an coating film according to an embodiment of the present disclosure.
FIG. 2 is a schematic diagram illustrating a process of producing an interlayer bonding polymer according to one embodiment of the present disclosure.
FIG. 3 is a schematic diagram illustrating the structure of the interlayer bonding polymer according to one embodiment of the present disclosure.
FIGs. 4A to 4C are schematic cross-sectional views illustrating a process for producing a coating film according to one embodiment of the present disclosure.
FIG. 5 is a cross-sectional view illustrating a part of a display device according to another embodiment of the present disclosure.
FIG. 6 is an enlarged cross-sectional view illustrating part "P" in FIG. 5.
FIG. 7 is a cross-sectional view illustrating a process for forming a grid pattern to measure grid pattern peelability.

### [Best Mode]

Hereinafter, the present disclosure will be described in detail with reference to the embodiments. However, the following embodiments are provided merely for better understanding of the present disclosure and do not limit the scope of the present disclosure.

In the case in which a term such as "comprise", "have", or "include" is used herein, another part may also be present, unless "only" is also used. Terms in a singular form may include the plural meanings, unless noted to the contrary. Also, in construing an element, the element is to be construed as including an error range, although there is no explicit description thereof.

In describing a positional relationship, for example, when the positional relationship is described using "on", "above", "below", or "next to", the case of no contact therebetween may be included, unless "immediately" or "directly" is used.

In describing temporal relationships, for example, when a temporal order is described using "after", "subsequent", "next", or "before", the case of a noncontinuous relationship may be included, unless "immediately" or "directly" is used.

It will be understood that, although the terms "first", "second", etc. may be used herein to describe various elements, these elements are not limited by these terms. These terms are only used to distinguish one element from another. Therefore, a first element could be termed a second element within the technical idea of the present disclosure.

It should be understood that the term "at least one" includes all combinations related with one or more items. For example, "at least one among a first element, a second element, and a third element" may include all combinations of two or more elements selected from among the first, second, and third elements, as well as each of the first, second, and third elements.

Features of various embodiments of the present disclosure may be partially or completely integrated or combined with each other, and may be variously interoperated with each other and driven technically. The embodiments of the present disclosure may be carried out independently from each other, or may be carried out together in an interrelated manner.

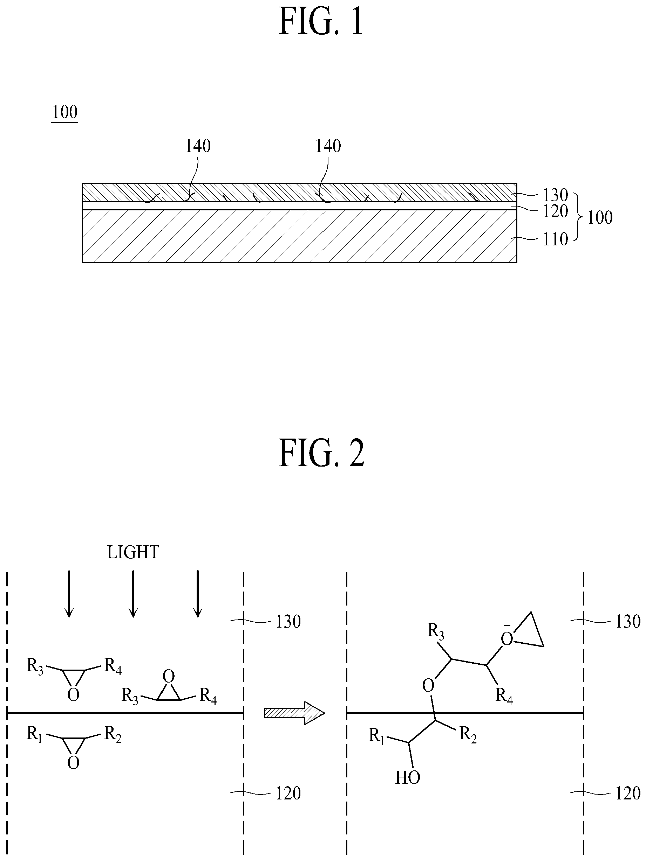

FIG. 1 is a schematic diagram illustrating a coating film 100 according to an embodiment of the present disclosure.

Referring to FIG. 1, the coating film 100 according to one embodiment of the present disclosure includes a base film 110, a first coating layer 120 on the base film 110, and a second coating layer 130 on the first coating layer 120.

A light-transmitting film may be used as the base film 110. A polyimide-based (PI) film may be used as the light-transmitting film. The polyimide-based (PI) film may be a polyimide film or a polyamide-imide film.

The polyimide film according to an embodiment of the present disclosure may be produced from monomer ingredients including a dicarbonyl-based compound and a diamine-based monomer. More specifically, the polyimide film to another embodiment of the present disclosure may include an imide repeating unit formed by dianhydride and diamine.

In addition, the polyimide film may be produced from monomer ingredients including a dicarbonyl-based compound in addition to the dianhydride and the diamine. Therefore, the polyimide film according an embodiment of the present disclosure may have an imide repeating unit and an amide repeating unit. For example, the polyimide film having an imide repeating unit and an amide repeating unit may be a polyamide-imide resin.

However, one embodiment of the present disclosure is not limited thereto and the base film 110 may be a polycarbonate (PC) film, a polyacrylic film, a polyethylene terephthalate film, a cellulose film, or the like.

According to one embodiment of the present disclosure, there is no particular limitation as to the thickness of the base film 110. The base film 110 may have a thickness sufficient to enable the coating film 100 to protect the display panel. For example, the base film 110 may have a thickness of 10 to 100 µm.

According to one embodiment of the present disclosure, the first coating layer 120 is disposed on the base film 110.

The first coating layer 120 acts as an interfacial layer between the two layers. The first coating layer 120 has excellent adhesive strength to the base film 110 and also has excellent adhesiveness to the second coating layer 130. The first coating layer 120 may act as an interfacial layer between the base film 110 and the second coating layer 130. Therefore, the first coating layer 120 may be referred to as "an interfacial layer" or an "adhesion-promoting layer", and may also be referred to as a "primer layer".

The first coating layer 120 may act to improve the adhesive strength between the base film 110 and the second coating layer 130. The second coating layer 130 may be stably attached to the base film 110 through the first coating layer 120.

In order for the second coating layer 130 to be stably attached to the base film 110, the first coating layer 120 may have a thickness of 0.05 to 1.0 µm.

When the thickness of the first coating layer 120 is less than 0.05 µm, it may be difficult to stably attach the second coating layer 130 to the base film 110. As a result, the adhesive strength and adhesion between the base film 110 and the second coating layer 130 may be reduced.

On the other hand, when the thickness of the first coating layer 120 exceeds 1.0 *µ*m, the thickness of the coating film 100 may become greater than necessary, and the flexibility and foldability of the coating film 100 may deteriorate and the optical properties may deteriorate.

According to one embodiment of the present disclosure, the first coating layer 120 may include a siloxane resin. More specifically, the first coating layer 120 may be formed from a first coating composition containing a siloxane binder.

For example, the first coating layer 120 may be formed from a first coating composition containing an epoxy-based siloxane binder and an acryl-based siloxane binder. The epoxy-based siloxane binder may contain an epoxy-based siloxane monomer and the acryl-based siloxane binder may contain an acryl-based siloxane monomer.

According to one embodiment of the present disclosure, the first coating composition containing an acryl-based siloxane binder may be polymerized or cured by photopolymerization. Therefore, according to one embodiment of the present disclosure, the first coating layer 120 may be formed by photopolymerization of the first coating composition.

The epoxy-based siloxane monomer may, for example, be 3-glycidoxypropyl trimethoxysilane. The 3-glycidoxypropyl trimethoxysilane may, for example, be KBM-403 from ShinEtsu Chemical Co., Ltd.

However, one embodiment of the present disclosure is not limited thereto and other known epoxy-based siloxane monomers may be used. The epoxy-based siloxane monomer may, for example, be 2-(3,4-epoxycyclohexyl)ethyltrimethoxysilane, 3-glycidoxypropylmethyldimethoxysilane, or the like.

The acryl-based siloxane monomer may, for example, be 3-methacryloxypropyl trimethoxysilane. According to one embodiment of the present disclosure, 3-methacryloxypropyl trimethoxysilane may be used. The 3-methacryloxypropyl trimethoxysilane may, for example, be KBM-503 from ShinEtsu Chemical Co., Ltd.

However, one embodiment of the present disclosure is not limited thereto and other known acryl-based siloxane monomers may be used. The acryl-based siloxane monomer may, for example, include 3-acryloxypropyl trimethoxysilane, 3-methacryloxypropyl methyldimethoxysilane, and the like.

According to one embodiment of the present disclosure, in the first coating composition for forming the first coating layer 120, the content of the acryl-based siloxane monomer may be more or less than the content of the epoxy-based siloxane monomer.

For example, with respect to the total weight of the monomers contained in the first coating composition, the content of the epoxy-based siloxane monomer may be 30 to 70 wt%, and the content of the acryl-based siloxane monomer may be 30 to 70 wt%. Specifically, with respect to the total weight of the monomers contained in the composition, the content of the epoxy-based siloxane monomer may be 33 to 67 wt% and the content of the acryl-based siloxane monomer may be 33 to 67 wt%, more specifically, the content of the epoxy-based siloxane monomer may be 40 to 60 wt%, and the content of the acryl-based siloxane monomer may be 40 to 60 wt%, and the content of the epoxy-based siloxane monomer may be 45 to 55 wt%, and the content of the acryl-based siloxane monomer may be 45 to 55 wt%.

However, one embodiment of the present disclosure is not limited thereto, and with respect to the total mole number of monomers contained in the first coating composition, the content of the acryl-based siloxane monomer may be 30 to 70 mol% and the content of the epoxy-based siloxane monomer may be 30 to 70 mol%, and the content of the epoxy-based siloxane monomer may be 40 to 60 mol% and the content of the acryl-based siloxane monomer may be 40 to 60 mol%.

According to one embodiment of the present disclosure, the epoxy-based siloxane monomer may be polymerized by heat treatment and the acryl-based siloxane monomer may be polymerized by light irradiation.

In addition, according to one embodiment of the present disclosure, the siloxane resin of the first coating layer 120 may include an epoxy siloxane resin and an acryl-based siloxane resin. The epoxy siloxane resin may include an epoxy-based siloxane repeating unit and the acryl-based siloxane resin may include an acryl-based siloxane repeating unit.

The first coating layer 120 may include an epoxy-based siloxane monomer. The epoxy-based siloxane monomer contained in the first coating layer 120 corresponds to an unreacted epoxy-based monomer.

According to one embodiment of the present disclosure, the second coating layer 130 is disposed on the first coating layer 120. According to one embodiment of the present disclosure, the second coating layer 130 may contain an epoxy-based polymer resin.

The second coating layer 130 may be formed from a second coating composition. The second coating composition may contain a polymerizable monomer.

According to one embodiment of the present disclosure, the second coating composition may contain an epoxy-based monomer. The epoxy-based monomer is a polymerizable monomer. The second coating composition containing the epoxy-based monomer may be referred to as an "epoxy-based composition".

The second coating composition containing the epoxy-based monomer may be cured by thermal polymerization. Therefore, according to one embodiment of the present disclosure, the second coating layer 130 may be formed by thermal polymerization of the epoxy-based composition.

According to one embodiment of the present disclosure, 2-(3,4-epoxycyclohexyl) ethyltrimethoxysilane may be used as an epoxy-based monomer for forming the second coating layer 130.

However, one embodiment of the present disclosure is not limited thereto and other known epoxy-based monomers may be used as monomers for forming the second coating layer 130. The epoxy-based monomer may, for example, include 3-glycidoxypropyl trimethoxysilane, 3,4-epoxycyclohexylmethyl 3,4-epoxycyclohexanecarboxylate, or the like.

According to one embodiment of the present disclosure, the second coating composition may further contain a silane compound and a polymerization curing agent in addition to the epoxy-based monomer. The polymerization curing agent may include a diol and water (H₂O).

According to one embodiment of the present disclosure, siloxane may be formed by the silane compound. Specifically, the second coating layer 130 may be formed by polymerizing and curing the second coating composition through polymerization and curing of the silane compound.

The second coating composition according to one embodiment of the present disclosure may further contain at least one additive selected from the group consisting of a polymerization initiator, an antioxidant, a leveling agent, and a coating aid.

According to one embodiment of the present disclosure, the polymerization initiator may, for example, include a thermal polymerization initiator such as amine or imidazole. The polymerization initiator may be used in an amount of about 0.01 to 2 parts by weight based on 100 parts by weight of the polymerizable monomer.

According to one embodiment of the present disclosure, a photopolymerization initiator and a thermal polymerization initiator may be used in combination in the first coating composition for forming the first coating layer 120, and the thermal polymerization initiator may be used in the second coating composition for forming the second coating layer 130.

According to an embodiment of the present disclosure, an organic solvent may be used to form the second coating layer 130. The viscosity of the second coating composition may be controlled by the organic solvent. As a result, the processability of the second coating composition may be controlled and thus the thickness of the second coating layer 130 may be easily adjusted.

For example, the organic solvent may include at least one selected from the group consisting of ketones such as acetone, methyl ethyl ketone, methyl butyl ketone, and cyclohexanone, cellosolves such as methyl cellosolve and butyl cellosolve, ethers such as ethyl ether and dioxane, alcohols such as isobutyl alcohol, isopropyl alcohol, butanol and methanol, halogenated hydrocarbons such as dichloromethane, chloroform, and trichloroethylene, and hydrocarbons such as n-hexane, benzene, and toluene.

According to one embodiment of the present disclosure, the second coating layer 130 may be formed by polymerization and curing of the second coating composition.

For example, the second coating composition is prepolymerized to form a paste-like pre-polymer, an organic solvent is added to the pre-polymer to prepare a paste-like second coating composition with adjusted viscosity, and then the first coating layer 120 on the base film 110 is coated the second coating composition, and then is cured and polymerized to form a second coating layer 130.

More specifically, when the first coating layer 120 is coated with the second coating composition, the first coating layer 120 may contain a polymer polymerized by an acryl-based siloxane monomer and may contain an epoxy-based siloxane monomer.

According to one embodiment of the present disclosure, the second coating layer 130 may be formed by coating or molding the first coating layer 120 on the base film 110 with the second coating composition by a method such as coating, casting, or molding, followed by thermal polymerization.

When the second coating composition is polymerized, a temperature suitable for thermal polymerization is 40°C or higher and 200°C or lower, but the temperature is not limited thereto. More specifically, thermal polymerization may be performed at a temperature of 80°C to 120°C.

For example, the first coating layer 120 on the base film 110 may be coated with the second coating composition and dried at 80°C for 5 minutes, and then the second coating composition-coated first coating layer 120 may be subjected to thermal polymerization and thermal curing through heat-treatment at a temperature of 120°C for 5 minutes.

The coating film 100 according to one embodiment of the present disclosure may contain an interlayer bonding polymer 140 disposed across the first coating layer 120 and the second coating layer 130.

One end of the interlayer bonding polymer 140 may be disposed on the first coating layer 120 and the other end of the interlayer bonding polymer 140 may be disposed on the second coating layer 130. For example, the interlayer bonding polymer 140 may be disposed across the interface between the first coating layer 120 and the second coating layer 130.

The interlayer bonding polymer 140 disposed across the interface between the first coating layer 120 and the second coating layer 130 is illustrated in FIG. 1.

FIG. 2 is a schematic diagram illustrating a process of forming the interlayer bonding polymer 140 according to one embodiment of the present disclosure.

Referring to FIG. 2, the interlayer bonding polymer 140 may be formed by polymerization of a thermally polymerizable monomer. Specifically, the interlayer bonding polymer 140 may be formed by thermal polymerization through heat treatment. According to one embodiment of the present disclosure, when the first coating layer 120 is coated with the second coating composition, the first coating layer 120 may contain a polymer formed by polymerization of an acryl-based siloxane monomer and may contain an epoxy-based siloxane monomer.

According to one embodiment of the present disclosure, the epoxy-based siloxane monomer contained in the first coating composition for forming the first coating layer 120 corresponds to a thermally polymerizable monomer. In addition, the epoxy-based monomer for forming the second coating layer 130 corresponds to a thermally polymerizable monomer.

Specifically, the monomer contained in the first coating layer 120 means an epoxy-based siloxane monomer in FIG. 2. In FIG. 2, at least one of R₁ and R₂ may be a hydrocarbon group including a siloxane group. In addition, either R₁ or R₂ may be hydrogen.

In addition, the monomer contained in the second coating layer 130 in FIG. 2 may be an epoxy-based monomer. In FIG. 2, at least one of R₃ or R₄ may be a substituted or unsubstituted hydrocarbon group. Either R₃ or R₄ may be hydrogen.

According to one embodiment of the present disclosure, the interlayer bonding polymer 140 may be formed by photopolymerization of the epoxy-based siloxane monomer contained in the first coating composition for forming the first coating layer 120 and the epoxy-based monomer for forming the second coating layer 130.

The interlayer bonding polymer 140 may include, for example, an epoxy-based polymer. The interlayer bonding polymer 140 may include an epoxy-based repeating unit formed by an epoxy-based siloxane monomer in the first coating layer 120 and a repeating unit formed by an epoxy-based monomer in the second coating layer 130.

According to one embodiment of the present disclosure, the epoxy repeating unit formed by the epoxy-based siloxane monomer in the first coating layer 120 may be connected to the repeating unit formed by the epoxy-based monomer in the second coating layer 130 to form an interlayer bonding polymer 140 (see FIG. 2).

More specifically, the interlayer bonding polymer 140 may be formed by thermal polymerization of the epoxy-based siloxane binder contained in the first coating composition for forming the first coating layer 120 and the epoxy-based composition for forming the second coating layer 130.

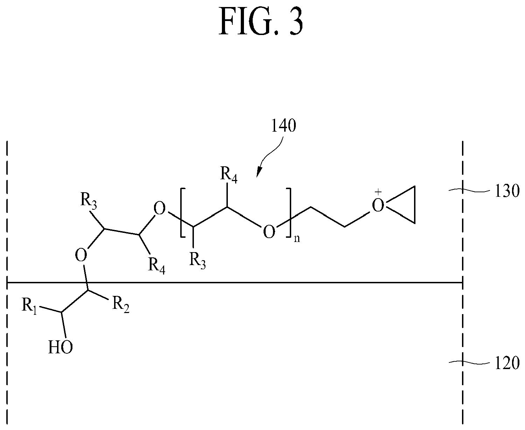

FIG. 3 is a schematic diagram illustrating the structure of the interlayer bonding polymer according to one embodiment of the present disclosure. Specifically, FIG. 3 illustrates the interlayer bonding polymer 140 formed by polymerization of the monomers shown in FIG. 2. In FIG. 3, at least one of R₁ and R₂ may be a hydrocarbon group including a siloxane group. In addition, at least one of R₃ or R₄ may be a substituted or unsubstituted hydrocarbon group. However, one embodiment of the present disclosure is not limited thereto and either R₁ or R₂ may be hydrogen and either R₃ or R₄ may be hydrogen. In FIG. 3, "n" is a natural number.

As can be seen from FIGs. 2 and 3, one end of the interlayer bonding polymer 140 is disposed on the first coating layer 120 and the other end of the interlayer bonding polymer 140 is disposed on the second coating layer 130. The first coating layer 120 and the second coating layer 130 may have excellent adhesion, adhesiveness, and adhesive stability based on the interlayer bonding polymer 140. In addition, the first coating layer 120 and the second coating layer 130 have excellent adhesion, adhesiveness, and adhesive stability, and thus the coating film 100 may have excellent hardness.

According to one embodiment of the present disclosure, the second coating layer 130 may have excellent hardness, light transmittance, and wear resistance. As a result, the coating film 100 including the second coating layer 130 may have excellent hardness, light transmittance, and wear resistance.

According to one embodiment of the present disclosure, the second coating layer 130 may have a thickness of 2 to 10 µm. When the thickness of the second coating layer 130 is less than 2 µm, the hardness and wear resistance of the coating film 100 imparted by the second coating layer 130 may not be sufficiently obtained. When the thickness of the second coating layer 130 is higher than 10 µm, the thickness of the coating film 100 may increase and the flexibility of the coating film 100 may decrease.

According to one embodiment of the present disclosure, the difference in refractive index between the base film 110 and the first coating layer 120 may be 0.1 to 0.3. In addition, the difference in refractive index between the first coating layer 120 and the second coating layer 130 may be less than 0.1. The first coating layer 120 may have a refractive index similar to that of the second coating layer 130. In addition, according to one embodiment of the present disclosure, the difference in refractive index between the base film 110 and the second coating layer 130 may be within the range of 0.1 to 0.3.

As the difference in refractive index between the base film 110 and the second coating layer 130 is adjusted to the range of 0.1 to 0.3, the coating film 100 may have excellent light transmittance.

According to one embodiment of the present disclosure, it is not easy to adjust the refractive index of the base film 110 and the second coating layer 130 to 0.1 or less due to the difference between the material constituting the base film 110 and the material constituting the second coating layer 130. Meanwhile, because the difference in refractive index between the base film 110 and the second coating layer 130 is adjusted to 0.3 or less, excessive reflection does not occur between the base film 110 and the second coating layer 130. As a result, the coating film 100 may have excellent light transmittance.

The base film 110 may have, for example, a refractive index of 1.6 to 1.7 and the second coating layer 130 may have a refractive index of 1.4 to 1.55. In addition, the first coating layer 120 may have a refractive index of 1.4 to 1.53.

According to one embodiment of the present disclosure, the coating film 100 may have a light transmittance of 90% or more.

The light transmittance may be measured in a wavelength range of 360 to 740 nm using a spectrophotometer in accordance with JIS K 7361. The spectrophotometer may, for example, be a hazemeter HM-150/Murakami color research laboratory.

According to one embodiment of the present disclosure, the second coating layer 130 has a pencil hardness of 4H or more. As a result, the coating film 100 has a pencil hardness of 4H or more.

The pencil hardness may be measured using a pencil hardness meter from IMOTO (Japan) at a speed of 180 mm/min and a load of 750 gf in accordance with the measurement conditions of ASTM D3363.

According to one embodiment of the present disclosure, the coating film 100 has a grid pattern peelability of 1 or less. The grid pattern peelability is obtained by forming 100 grid patterns (10 x 10) with a size 1 mm x 1 mm on the second coating layer 130 of the coating film 100 using a cutter, attaching a transparent 3M scotch box tape (48 mm, #3650) to the surface of the second coating layer, removing the tape from the surface, and measuring the number of grid patterns on the second coating layer 130 separated from the coating film 100 and attached to the tape within 0.1 seconds after the removal.

When the grid patterns are formed on the second coating layer 130 using the cutter, only the second coating layer 130 is cut and the base film 110 is not cut. The first coating layer 120 may be partially cut or may not be cut.

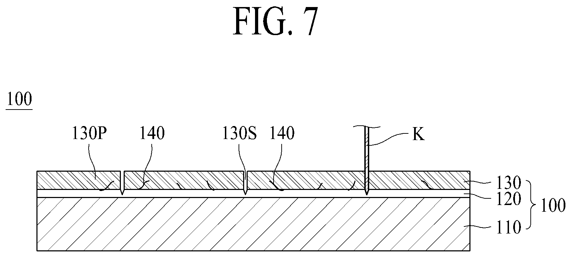

The grid patterns may be formed, for example, by the method shown in FIG. 7.

FIG. 7 is a schematic cross-sectional view illustrating a process of forming grid patterns 130p to measure grid pattern peelability.

Referring to FIG. 7, grid patterns 130p may be formed by cutting from the surface of the second coating layer 130 to the first coating layer 120 based on the thickness direction of the coating film 100. In the process of forming the grid patterns 130p, the second coating layer 130 may be cut by a cutter K.

A cutting groove 130s is formed by cutting by the cutter K. The cutting groove 130s may penetrate the second coating layer 130 and partially penetrate the first coating layer 120. Each grid pattern 130p may be defined by the cutting groove 130s.

In the coating film 100 according to one embodiment of the present disclosure, as the second coating layer 130 has excellent adhesive strength to the first coating layer 120, the second coating layer 130 is not easily separated from the first coating layer 120. Therefore, the coating film 100 according to one embodiment of the present disclosure may have a grid pattern peelability of 1 or less.

In addition, the coating film 100 according to one embodiment of the present disclosure may have a grid pattern peelability of 1 or less after heat treatment at 230°C for 1 hour. Specifically, even when the grid pattern peelability of the coating film 100 according to one embodiment of the present disclosure is measured after heat treatment at 230°C for 1 hour, the coating film 100 according to one embodiment of the present disclosure may have a grid pattern peelability of 1 or less.

The coating film 100 according to one embodiment of the present disclosure may have a yellowness index of 3.0 or less. More specifically, the coating film 100 according to one embodiment of the present disclosure may have a yellowness index of 2.5 or less. In addition, the coating film 100 according to one embodiment of the present disclosure may have a yellowness index of 3.0 or less after heat treatment at 230°C for 1 hour, and more specifically, may have a yellowness index of 2.5 or less.

Another embodiment of the present disclosure provides a method of producing the coating film 100.

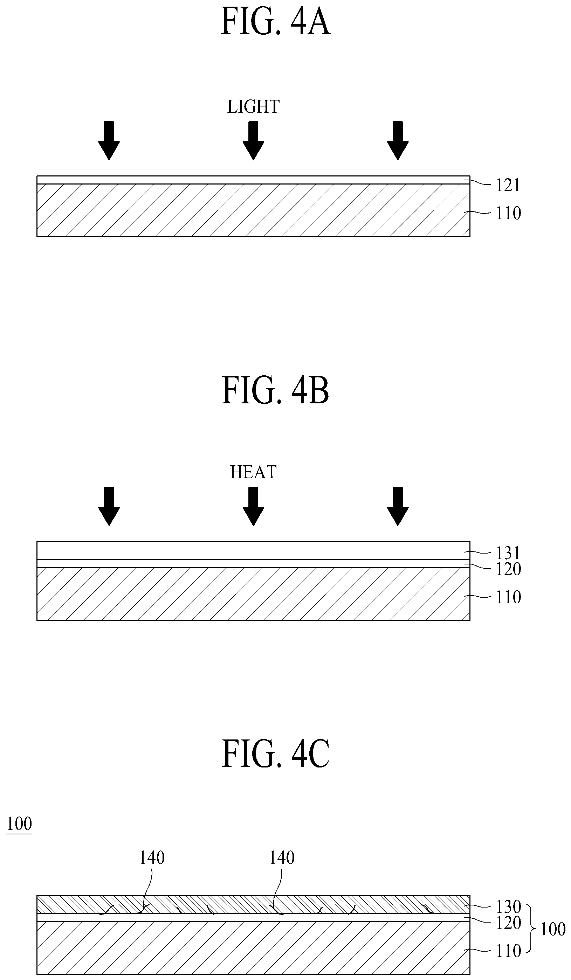

FIGs. 4A to 4C are schematic cross-sectional views illustrating a process of producing the coating film 100 according to one embodiment of the present disclosure. The method of producing the coating film 100 according to another embodiment of the present disclosure will be described in detail with reference to FIGs. 4A to 4C.

The method of producing the coating film 100 according to another embodiment of the present disclosure includes applying a first coating composition 121 to a base film 110, irradiating the first coating composition 121 with light (LIGHT) to form a first coating layer 120, applying a second coating composition 131 onto the first coating layer 120, and applying heat (HEAT) onto the second coating composition 131 to form a second coating layer 130.

Referring to FIG. 4A, the first coating composition 121 is applied onto the base film 110.

A light-transmitting film may be used as the base film 110. A polyimide-based (PI) film may be used as the light-transmitting film. Examples of the polyimide-based (PI) film include a polyimide film and a polyamideimide film.

The first coating composition 121 may contain an epoxy-based siloxane binder and an acryl-based siloxane binder.

According to one embodiment of the present disclosure, the epoxy-based siloxane binder may contain an epoxy-based siloxane monomer. In addition, the acryl-based siloxane binder may contain an acryl-based siloxane monomer. On a molar basis, the content of the acryl based siloxane monomer may be greater than the content of the epoxy-based siloxane monomer.

Then, the first coating composition 121 is irradiated with light (LIGHT). Irradiating the first coating composition 121 with light (LIGHT) is also referred to as "light irradiation".

The first coating layer 120 is formed by irradiating the first coating composition 121 with light (LIGHT). Specifically, the first coating layer 120 is formed by polymerization of the acryl-based siloxane monomer through the light (LIGHT) with which the first coating composition 121 is irradiated. Accordingly, an acryl-based siloxane polymer is formed on the first coating layer 120.

The first coating composition 121 contains an epoxy-based siloxane monomer in addition to an acryl-based siloxane monomer. However, the epoxy-based siloxane monomer is not polymerized by the light (LIGHT) with which the first coating composition 121 is irradiated.

The epoxy-based siloxane monomer, which is an epoxy-based siloxane binder, may remain on the first coating layer 120 after the light (LIGHT) irradiation shown in FIG. 4A.

Referring to FIG. 4B, the second coating composition 131 is applied to the first coating layer 120. The second coating composition 131 contains an epoxy-based monomer. When the second coating composition is applied to the first coating layer 120, the acryl-based siloxane monomer contained in the first coating composition 121 may be polymerized and at least a portion of the epoxy-based siloxane monomer may be not polymerized.

Then, heat (HEAT) is applied to the second coating composition 131. As a result, the second coating layer 130 is formed, as shown in FIG. 4C.

The epoxy-based monomer contained in the second coating composition 131 is polymerized by the heat (HEAT) with which the first coating composition 121 is irradiated. As a result, an epoxy-based monomer is formed. The epoxy-based monomer is formed in the second coating layer 130.

In addition, the epoxy-based siloxane binder contained in the first coating layer 120 is polymerized by the heat (HEAT) with which the first coating composition 121 is irradiated. Specifically, the epoxy-based siloxane monomer contained in the epoxy-based siloxane binder is polymerized by heat (HEAT). As a result, an epoxy-based siloxane polymer may be formed in the first coating layer 120 (see FIG. 2).

According to one embodiment of the present disclosure, in forming the second coating layer 130, the epoxy-based siloxane binder contained in the first coating layer 120 and the epoxy-based monomer contained in the second coating composition 131 are polymerized to form an interlayer bonding polymer 140 across the first coating layer 120 and the second coating layer 130.

The interlayer bonding polymer 140 is formed across the interface between the first coating layer 120 and the second coating layer 130 and across the first coating layer 120 and the second coating layer 130.

The interlayer bonding polymer 140 may include an epoxy-based repeating unit formed by the epoxy-based siloxane monomer contained in the first coating composition 121 and a repeating unit formed by the epoxy-based monomer contained in the second coating composition 131.

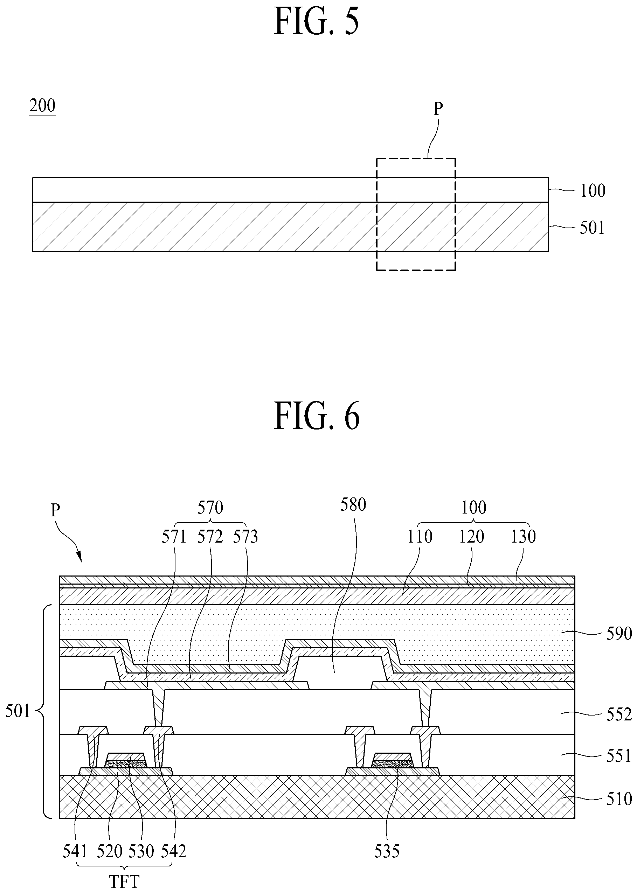

FIG. 5 is a cross-sectional view illustrating a part of a display device 200 according to another embodiment of the present disclosure. FIG. 6 is an enlarged cross-sectional view illustrating part "P" in FIG. 5.

Referring to FIG. 5, the display device 200 according to another embodiment of the present disclosure includes a display panel 501 and a coating film 100 on the display panel 501. In FIG. 5, the display device 200 including the coating film 100 of FIG. 1 is disclosed.

Referring to FIGs. 5 and 6, the display panel 501 includes a substrate 510, a thin film transistor TFT on the substrate 510, and an organic light-emitting device 570 connected to the thin film transistor TFT. The organic light-emitting device 570 includes a first electrode 571, an organic light-emitting layer 572 on the first electrode 571, and a second electrode 573 on the organic light-emitting layer 572. The display device 200 shown in FIGs. 5 and 6 is an organic light-emitting display device.

The substrate 510 may be formed of glass or plastic. Specifically, the substrate 510 may be formed of plastic such as a polyimide-based resin or an optical film. Although not shown, a buffer layer may be disposed on the substrate 510.

The thin film transistor TFT is disposed on the substrate 510.

The thin film transistor TFT includes a semiconductor layer 520, a gate electrode 530 that is insulated from the semiconductor layer 520 and at least partially overlaps the semiconductor layer 520, a source electrode 541 connected to the semiconductor layer 520, and a drain electrode 542 that is spaced apart from the source electrode 541 and is connected to the semiconductor layer 520.

Referring to FIG. 6, a gate insulating layer 535 is disposed between the gate electrode 530 and the semiconductor layer 520. An interlayer insulating layer 551 may be disposed on the gate electrode 530, and the source electrode 541 and the drain electrode 542 may be disposed on the interlayer insulating layer 551.

A planarization layer 552 is disposed on the thin film transistor TFT to planarize the top of the thin film transistor TFT.

A first electrode 571 is disposed on the planarization layer 552. The first electrode 571 is connected to the thin film transistor TFT through a contact hole provided in the planarization layer 552.

A bank layer 580 is disposed on the planarization layer 552 in a part of the first electrode 571 to define pixel areas or light-emitting areas. For example, the bank layer 580 is disposed in the form of a matrix at the boundaries between a plurality of pixels to define the respective pixel regions.

The organic light-emitting layer 572 is disposed on the first electrode 571. The organic light-emitting layer 572 may also be disposed on the bank layer 580. The organic light-emitting layer 572 may include one light-emitting layer, or two or more light-emitting layers stacked in a vertical direction. Light having any one color among red, green, and blue may be emitted from the organic light-emitting layer 572, and white light may be emitted therefrom.

The second electrode 573 is disposed on the organic light-emitting layer 572.

The first electrode 571, the organic light-emitting layer 572, and the second electrode 573 may be stacked to constitute the organic light-emitting device 570.

Although not shown, when the organic light-emitting layer 572 emits white light, each pixel may include a color filter for filtering the white light emitted from the organic light-emitting layer 572 based on a particular wavelength. The color filter is formed on the light path.

A thin-film encapsulation layer 590 may be disposed on the second electrode 573. The thin-film encapsulation layer 590 may include at least one organic layer and at least one inorganic layer, and the at least one organic layer and the at least one inorganic layer may be alternately disposed.

The coating film 100 is disposed on the display panel 501 having the stack structure described above. The coating film 100 may be used as a cover window to cover and protect the light-emitting surface of the display panel 501.

Hereinafter, the present disclosure will be described in more detail with reference to specific examples and comparative examples. However, these examples and comparative examples are provided only for better understanding of the present disclosure and should not be construed as limiting the present disclosure.

### <Example 1>

### (1) Formation of first coating layer 120

100 mmol (23.63 g) of 3-glycidoxypropyl trimethoxysilane (KBM-403 from ShinEtsu Chemical Co., Ltd.) as an epoxy-based siloxane monomer, 150 mmol (2.7 g) of distilled water, and 0.1 g of NaOH were mixed in a 50 mL flask, followed by stirring at 60°C for 4 hours to prepare an epoxy-based siloxane binder. The mixing and stirring were performed in an open system.

100 mmol (24.84 g) of 3-methacryloxypropyl trimethoxysilane (KBM-503 from ShinEtsu Chemical Co., Ltd.), as an acryl-based siloxane monomer, 150 mmol (2.7 g) of distilled water, and 0.1 g of NaOH were mixed in a 50 mL flask, followed by stirring at 60°C for 4 hours to prepare an acryl-based siloxane binder. The mixing and stirring were performed in an open system.

1.5 g of the epoxy-based siloxane binder (3-glycidoxypropyl trimethoxysilane; 1.341 g), 1.5 g of an acryl-based siloxane binder (3-methacryloxypropyl trimethoxysilane; 1.348 g), 97 g of MEK, and 0.03 g of 2,2-dimethoxy-2-phenylacetophenone were mixed, followed by stirring in a flask to prepare a first coating composition.

A polyimide film (CPI^{®}, KOLON) having a thickness of 50 µm was prepared as a base film 110.

The prepared first coating composition was applied to the base film 110 using Mayer Bar. No. 8, dried at 80°C for 2 minutes, and then irradiated with UV_A at 120 mW/cm² and 2 J/cm² to perform photopolymerization and photocuring and thereby form a first coating layer 120. In the process of forming the first coating layer 120, 3-methacryloxypropyl trimethoxysilane, which is an acryl-based siloxane monomer contained in the first coating composition, may be polymerized, and 3-glycidoxypropyl trimethoxysilane, which is an epoxy-based siloxane monomer, may remain unpolymerized.

### (2) Formation of second coating layer 130

2-(3,4-epoxycyclohexyl)ethyltrimethoxysilane (KBM-303, ShinEtsu Chemical Co., Ltd.) was used as an epoxy-based monomer for forming the second coating layer 130.

Specifically, 100 mmol (24.65 g) of 2-(3,4 epoxycyclohexyl) ethyltrimethoxysilane (KBM-303, ShinEtsu Chemical Co., Ltd.), 100 mmol (1.8 g) of distilled water, 50 mmol (3.1 g) of ethylene glycol, and 0.1 g of NaOH were mixed in a 50 mL flask, followed by stirring at 80°C for 10 hours to prepare a second coating composition. The mixing and stirring were performed in an open system.

The prepared second coating composition was applied to the first coating layer 120 using Mayer Bar No. 16, dried at 80°C for 5 minutes, and heat-treated at 120°C for 5 minutes to perform thermal polymerization and thermal curing and thereby to form a second coating layer 130.

As a result, a coating film 100 according to Example 1 was formed.

### <Example 2>

A coating film was formed in the same manner as in Example 1, except that 2 g of the acryl-based siloxane binder (3-methacryloxypropyl trimethoxysilane; 1.797 g) prepared in Example 1 and 1 g of the epoxy-based siloxane binder (3-glycidoxypropyl trimethoxysilane; 0.894 g), 97 g of MEK, and 0.03 g of 2,2-dimethoxy-2-phenylacetophenone were mixed and stirred in a flask to prepare a first coating composition.

### <Example 3>

A coating film was formed in the same manner as in Example 1, except that 1 g of the acryl-based siloxane binder (3-methacryloxypropyl trimethoxysilane; 0.899 g) prepared in Example 1 and 2 g of the epoxy-based siloxane binder (3-glycidoxypropyl trimethoxysilane; 1.788 g), 97 g of MEK, and 0.03 g of 2-ethyl-4-methylimidazole were mixed and stirred in a flask to prepare a first coating composition.

### <Example 4>

The first coating layer 120 was formed in the same manner as in Example 1.

3,4-epoxycyclohexylmethyl-3',4'-epoxycyclohexane carboxylate (EEC) was used as an epoxy-based monomer for forming the second coating layer 130.

Specifically, 3 g of EEC and 0.03 g of 2-ethyl-4-methylimidazole were dissolved in 6 g of MEK to prepare a second coating composition.

The prepared coating composition was applied onto the formed first coating layer 120 using Mayer Bar No. 16, dried at 80°C for 5 minutes, and then was heat-treated at 120°C for 5 minutes to perform thermal polymerization and thermal curing and thereby form a second coating layer 130.

### <Example 5>

The first coating layer 120 was formed in the same manner as in Example 2 and the second coating layer 130 was formed in the same manner as in Example 4.

### <Example 6>

The first coating layer 120 was formed in the same manner as in Example 3 and the second coating layer 130 was formed in the same manner as in Example 4.

### <Comparative Example 1>

A coating film was produced in the same manner as Example 1, except that the first coating layer 120 was not formed.

Specifically, first, 100 mmol of 2-(3,4-epoxycyclohexyl)ethyltrimethoxysilane (KBM-303 from ShinEtsu Chemical Co., Ltd.), 100 mmol of distilled water, 50 mmol of ethylene glycol, and 0.1 g of NaOH were mixed in a 50 mL flask, followed by stirring at 80°C for 10 hours to prepare a second coating composition.

The prepared second coating composition was applied to a 50 *µ*m thick polyimide film (CPI^{®}, KOLON) as a base film 110 using Mayer Bar No. 16, dried at 80°C for 5 minutes, and then heat-treated at 60°C for 4 hours to perform thermal polymerization and thermal curing, and thereby form a second coating layer 130.

As a result, the coating film according to Comparative Example 1 was produced.

### <Comparative Example 2>

A coating film was produced in the same manner as Example 1, except that the acryl-based siloxane binder was used alone to prepare a composition for forming a first coating layer 120.

Specifically, 100 mmol of 3-methacryloxypropyl trimethoxysilane (KBM-503 from ShinEtsu Chemical Co., Ltd.), which is an acryl-based siloxane monomer, 150 mmol of distilled water, and 0.1 g of NaOH were mixed in a 50 mL flask, followed by stirring at 60°C for 4 hours to prepare an acryl-based siloxane binder. The mixing and stirring were performed in an open system.

3 g of the prepared epoxy-based siloxane binder, 97 g of MEK, and 0.03 g of 2,2-dimethoxy-2-phenylacetophenone were mixed, followed by stirring in a flask to prepare a first coating composition.

Then, the prepared first coating composition was applied to the base film 110 using Mayer Bar. No. 8, dried at 80°C for 2 minutes, and then irradiated with UV_A at 120 mW/cm² and 2 J/cm² to perform photopolymerization and photocuring, and thereby form a first coating layer 120.

A second coating layer 130 was formed on the first coating layer 120 in the same manner as in Example 1.

### <Comparative Example 3>

A coating film was produced in the same manner as in Example 1, except that an acryl-based monomer was used alone to prepare the first coating composition.

Specifically, 3 g of dipentaerythritol hexaacrylate (DPHA) as an acrylic monomer, 97 g of MEK, and 0.03 g of 2,2-dimethoxy-2-phenylacetophenone were mixed, followed by stirring in a flask to prepare a first coating composition.

Then, the prepared first coating composition was applied to a base film 110 using Mayer Bar. No. 8, dried at 80°C for 2 minutes, and then irradiated with UV_A at 120 mW/cm² and 2 J/cm² to perform photopolymerization and photocuring, and thereby form a first coating layer 120.

A second coating layer 130 was formed on the first coating layer 120 in the same manner as in Example 1.

### <Comparative Example 4>

1.5 g of epoxy-based monomer 3,4-epoxycyclohexylmethyl-3,4-epoxycyclohexanecarboxylate (EEC) (Sigma Aldrich), 1.5 g of DPHA, 97 g of MEK, and 0.03 g of 2,2-dimethoxy-2-phenylacetophenone were added and stirred to prepare a first coating composition. Then, a base film 110 was coated with the first coating composition to form a first coating layer 120. A second coating layer 130 was formed on the first coating layer 120 in the same manner as in Example 1.

### <Comparative Example 5>

3 g of the epoxy-based siloxane binder (3-glycidoxypropyl trimethoxysilane; 2.682g) prepared in Example 1, 97 g of MEK, and 0.03 g of 2,2-dimethoxy-2-phenylacetophenone were added and stirred to prepare a first coating composition, and a base film 110 was coated with the first coating composition to prepare a first coating layer 120. A second coating layer 130 was formed on the first coating layer 120 in the same manner as in Example 1.

### <Comparative Example 6>

1.5 g of the epoxy-based siloxane binder (3-glycidoxypropyl trimethoxysilane; 1.341 g) prepared in Example 1, 1.5 g of EEC, 97 g of MEK, and 0.03 g of 2,2-dimethoxy-2-phenylacetophenone were added and stirred to prepare a first coating composition, and a base film 110 was coated with the first coating composition to prepare a first coating layer 120. A second coating layer 130 was formed on the first coating layer 120 in the same manner as in Example 1.

The types and contents of each component according to Examples 1 to 6 and Comparative Examples 1 to 6 are shown in Table 1.

**[Table 1]**

| No. | First coating composition (wt, g) | | | | Second coating composition |
|---|---|---|---|---|---|
| | Acryl-based siloxane binder | Acryl-based monomer | Epoxy-based siloxane monomer | Epoxy-based monomer | Epoxy-based monomer |
| Example 1 | 1.5 | - | 1.5 | - | KBM-303 |
| Example 2 | 2 | - | 1 | - | KBM-303 |
| Example 3 | 1 | - | 2 | - | KBM-303 |
| Example 4 | 1.5 | - | 1.5 | - | EEC |
| Example 5 | 2 | - | 1 | - | EEC |
| Example 6 | 1 | - | 2 | - | EEC |
| Comparative Example 1 | - | - | - | - | KBM-303 |
| Comparative Example 2 | 3 | - | - | - | KBM-303 |
| Comparative Example 3 | - | 3 | - | - | KBM-303 |
| Comparative Example 4 | - | 1.5 | - | 1.5 | KBM-303 |
| Comparative Example 5 | - | - | 3 | - | KBM-303 |
| Comparative Example 6 | - | - | 1.5 | 1.5 | KBM-303 |

| | | | | | |
|---|---|---|---|---|---|
| *Acryl-based siloxane binder: 3-methacryloxypropyl trimethoxysilane + distilled water + NaOH *Acryl-based monomer: dipentaerythritol hexaacrylate (DPHA) *Epoxy-based siloxane binder: 3-glycidoxypropyl trimethoxysilane + distilled water + NaOH *Epoxy-based monomer: 3,4-epoxycyclohexylmethyl-3,4-epoxycyclohexanecarboxylate (EEC) | | | | | |

### <Measurement example>

The physical properties of the coating films produced in Examples 1 to 6 and Comparative Examples 1 to 6 were measured in accordance with the following methods.

### (1) Measurement of light transmittance (%)

The light transmittance was measured in a wavelength range of 360 to 740 nm using a spectrophotometer in accordance with the standard JIS K 7361. The spectrophotometer used herein was a hazemeter HM-150/Murakami color research laboratory.

### (2) Measurement of pencil hardness

The pencil hardness was measured using a pencil hardness meter from IMOTO (Japan) at a speed of 180 mm/min and a load of 1 Kgf in accordance with ASTM D3363.

### (3) Measurement of yellowness index

The yellowness index was measured using a spectrophotometer in accordance with ASTM E313-73 using a D65 light source at a viewing angle of 8°. The spectrophotometer used herein was CM-3600A produced by Konica Minolta, Inc.

The yellowness index of the coating films produced in Examples and Comparative Examples was measured (measured before heat treatment), and the yellowness index was measured again after the coating films were heat treated at 230°C for 1 hour.

### (4) Grid pattern peelability

100 grid patterns (10 x 10) with a size 1 mm x 1 mm were formed on the second coating layer 130 of the coating film 100 using a cutter, a transparent 3M scotch box tape (48 mm, #3650) was attached to the surface of the second coating layer, the tape was removed from the surface, and the number of grid patterns on the second coating layer 130 separated from the coating film 100 and attached to the tape was measured within 0.1 seconds after the removal.

The grid patterns 130p may be formed using the method shown in FIG. 7. The grid patterns 130p may be created by forming cutting grooves 130s in the second coating layer 130 using a cutter K. When the grid patterns 130p are formed in the second coating layer 130 using the cutter K, only the second coating layer 130 is cut and the base film 110 and the first coating layer 120 are not cut. The first coating layer 120 may be partially cut.

The grid pattern peelability of the coating films produced in Examples and Comparative Examples was measured (measured before heat treatment) and the grid pattern peelability was measured again after the coating films were heat treated at 230°C for 1 hour.

### (5) Confirmation of interlayer bonding polymer 140

Whether or not the interlayer bonding polymer was disposed across the first coating layer 120 and the second coating layer 130 was determined using IR Spectroscopy. Specifically, whether or not unreacted epoxy groups (1230 to 1280, 815 to 950, 750 to 880 cm⁻¹) exist in the first coating layer 120 was determined using IR Spectroscopy. The interlayer bonding polymer 140 was detected based on the presence of surface-reactive molecules.

More specifically, according to Examples and Comparative Examples of the present disclosure, the monomer remaining in the first coating layer 120 before the formation of the second coating layer 130 after the formation of the first coating layer 120 is an epoxy-based monomer, and the unreacted epoxy-based monomer also exists on the surface of the first coating layer 120. Therefore, the epoxy-based monomer corresponds to the surface-reactive molecule. In the embodiments of the present disclosure, the epoxy-based siloxane monomer may correspond to the unreacted epoxy-based monomer.

The presence of a peak of an unreacted epoxy group (1230 to 1280, 815 to 950, 750 to 880 cm⁻¹) as a surface-reactive molecule in IR spectroscopy means that an unreacted epoxy-based monomer capable of participating in polymerization exists in the interior and surface of the first coating layer 120 when the second coating layer 130 is formed. When the unreacted epoxy-based monomer present in the interior and surface of the first coating layer 120 participates in polymerization, as shown in FIGs. 2 and 3, the unreacted epoxy-based monomer (epoxy-based siloxane monomer) of the first coating layer 120 and the epoxy-based monomer of the second coating composition 131 may react. As a result, an interlayer bonding polymer 140 may be formed. Therefore, the presence of the peak of unreacted epoxy group (1230 to 1280, 815 to 950, 750 to 880 cm⁻¹), which is a surface-reactive molecule in IR spectroscopy, means that the interlayer bonding polymer 140 is formed.

The results of measurement are shown in Table 2 below.

**[Table 2]**

| No. | Light transmittance | Yellowness index | Pencil hardness | Grid pattern peelability | Presence of surfa ce-reactive molecule | Presence of interlayer bonding polymer | After 1 hour at 230°C | |
|---|---|---|---|---|---|---|---|---|
| | | | | | | | Grid pattern peelability | Yellowness index |
| Example 1 | 90.5 | 2.4 | 4H | 0/100 | Y | Y | 0/100 | 2.4 |
| Example 2 | 90.5 | 2.4 | 4H | 0/100 | Y | Y | 0/100 | 2.4 |
| Example 3 | 90.5 | 2.4 | 4H | 0/100 | Y | Y | 0/100 | 2.4 |
| Example 4 | 90.3 | 2.4 | 4H | 0/100 | Y | Y | 0/100 | 2.4 |
| Example 5 | 90.3 | 2.4 | 4H | 0/100 | Y | Y | 0/100 | 2.4 |
| Example 6 | 90.3 | 2.4 | 4H | 0/100 | Y | Y | 0/100 | 2.4 |
| Comparative Example 1 | 89.3 | 2.5 | 3H | 35/100 | N | N | 33/100 | 2.4 |
| Comparative Example 2 | 90.1 | 2.5 | 3H | 36/100 | N | N | 32/100 | 2.4 |
| Comparative Example 3 | 89.8 | 2.5 | 3H | 52/100 | N | N | 48/100 | 2.6 |
| Comparative Example 4 | 89.9 | 2.5 | 4H | 12/100 | Y | Y | 10/100 | 2.7 |
| Comparative Example 5 | 89.9 | 2.5 | 2H | 85/100 | Y | Y | 83/100 | 2.7 |
| Comparative Example 6 | 89.9 | 2.5 | 2H | 88/100 | Y | Y | 85/100 | 2.7 |

In the item of presence of surface-reactive molecule of Table 2, "Y" means that an interlayer bonding polymer exists and "N" means that an interlayer bonding polymer does not exist.

As can be seen from Table 2, the coating films 100 according to Examples 1 to 6 had a light transmittance of 90% or more, a pencil hardness of 4H or more, and a grid pattern peelability of 1 or less.

It can be seen that, in Comparative Example 1, which did not include the first coating layer 120 that acts as an interface layer or an adhesion-promoting layer, an interlayer bonding polymer was not formed, the grid patterns were peeled and thus the pencil hardness was decreased.

It can be seen that, in Comparative Example 2 which did not include the epoxy-based siloxane binder and the epoxy-based monomer, an interlayer bonding polymer was not formed, grid patterns were peeled, and the pencil hardness was decreased.

It can be seen that, in Comparative Example 3, which did not include the acryl-based siloxane binder and the acryl-based siloxane monomer, an interlayer bonding polymer was not formed. In addition, Comparative Example 3, which did not include the siloxane-based monomer, had a relative decrease in light transmittance, and deterioration in grid pattern peelability and pencil hardness, an increase in yellowness index after high-temperature treatment, and thus a decrease in heat resistance.

It can be seen that, Comparative Example 4, which did not include the siloxane-based binder containing a siloxane-based monomer, exhibited decreases in light transmittance and grid pattern peelability, although an interlayer bonding polymer was formed. Comparative Example 4 exhibited no decrease in pencil hardness, but had an increase in yellowness index after high-temperature treatment.

It can be seen that, in Comparative Examples 5 and 6, which did not include the acryl-based monomer and the acryl-based siloxane binder, and included the epoxy-based siloxane binder (Comparative Example 5) or the epoxy-based siloxane binder and the epoxy-based monomer (Comparative Example 6), the grid pattern peelability was significantly decreased compared to Examples and the pencil hardness decreased.

As such, it can be seen that the coating films (Examples 1 to 6) according to embodiments of the present disclosure has excellent surface properties and excellent adhesiveness.

As such, the coating film according to one embodiment of the present disclosure has excellent hardness, scratch resistance and adhesiveness, and thus is useful as a cover window or protective film of a display device.

### [Explanation of reference numerals]

- 100:: Coating film
- 110:: Base film
- 120:: First coating layer
- 130:: Second coating layer
- 200:: Display device
- 501:: Display panel
- 570:: Organic light emitting device
- TFT:: Thin film transistor

## Claims

1. A coating film comprising:
a base film;
a first coating layer on the base film;
a second coating layer on the first coating layer; and
an interlayer bonding polymer disposed across the first coating layer and the second coating layer,
wherein the interlayer bonding polymer comprises an epoxy-based polymer, and
the coating film has grid pattern peelability of 1 or less,
wherein the grid pattern peelability is a value obtained by forming 100 grid patterns (10 x 10) with a size 1 mm x 1 mm on the second coating layer of the coating film using a cutter, attaching a transparent 3M scotch box tape (48 mm, #3650) to the surface of the second coating layer, removing the tape from the surface, and measuring the number of grid patterns on the second coating layer separated from the coating film and attached to the tape within 0.1 seconds after the removal.

2. The coating film according to claim 1, wherein one end of the interlayer bonding polymer is disposed in the first coating layer and the other end of the interlayer bonding polymer is disposed in the second coating layer.

3. The coating film according to claim 1, wherein the interlayer bonding polymer is formed by polymerization of a thermally polymerizable monomer.

4. The coating film according to claim 1, wherein the second coating layer comprises an epoxy-based polymer resin.

5. The coating film according to claim 1, wherein the first coating layer is formed from a first coating composition comprising an epoxy-based siloxane monomer and an acryl-based siloxane monomer.

6. The coating film according to claim 5, wherein the epoxy-based siloxane monomer is polymerized by heat, and
the acryl-based siloxane monomer is polymerized by light irradiation.

7. The coating film according to claim 5, wherein the first coating layer comprises an epoxy-based siloxane monomer.

8. The coating film according to claim 5, wherein the second coating layer is formed by thermal polymerization of a second coating composition containing an epoxy-based monomer, and
the interlayer bonding polymer is formed by thermal polymerization of the epoxy-based siloxane monomer contained in the first coating composition and the second coating composition.

9. The coating film according to claim 1, wherein the coating film has a light transmittance of 90% or more.

10. The coating film according to claim 1, wherein the second coating layer has a pencil hardness of 4H or more.

11. A method of producing a coating film comprising:
applying a first coating composition to a base film;
irradiating the first coating composition with light to form a first coating layer;
applying a second coating composition to the first coating layer; and
applying heat to the second coating composition to form a second coating layer,
wherein the first coating composition comprises an epoxy-based siloxane monomer and an acryl-based siloxane monomer, and
the second coating composition comprises an epoxy-based monomer.

12. The method according to claim 11, wherein, in forming the second coating layer, the epoxy-based siloxane monomer contained in the first coating layer and the epoxy-based monomer contained in the second coating composition are polymerized to form an interlayer bonding polymer across the first coating layer and the second coating layer.

13. The method according to claim 11, wherein the acryl-based siloxane monomer is polymerized by light irradiated to the first coating composition and the epoxy-based siloxane monomer is not polymerized by the light.

14. A display device comprising:
a display panel; and
the coating film according to any one of claims 1 to 10 disposed on the display panel.
